# FASCICULE DE BREVET EUROPEEN

(11) **EP 3 973 171 B1**
(45) Date de publication et mention de la délivrance du brevet: **02.08.2023**
(21) Numéro de dépôt: 20737251.7
(22) Date de dépôt: 19.05.2020
(51) Int. Cl.: F02K 9/60, F02K 9/97, F16F 15/04, B64G 1/40, F02K 9/84

(54) **SYSTÈME D'AMORTISSEMENT NON LINÉAIRE POUR MOTEUR DE LANCEUR SPATIAL**
NICHT-LINEARES DÄMPFUNGSSYSTEM FÜR EINEN RACKETENANTRIEB
NON LINEAR DAMPING SYSTEM FOR A ROCKET ENGINE

(30) Priorité: 21.05.2019 FR 1905297
(43) Date de publication de la demande: 30.03.2022
(73) Titulaire: ArianeGroup SAS, 78130 Les Mureaux (FR)
(72) Inventeur: PYRE, Alain, 27207 VERNON CEDEX (FR); DAVID, Noël, 27207 VERNON CEDEX (FR)
(74) Mandataire: Cabinet Beau de Loménie
(86) Numéro de dépôt international: PCT/FR2020/050830
(87) Numéro de publication internationale: WO 2020/234539

(56) Documents cités:
- RU-C1- 2 429 371
- US-A- 3 279 193
- US-A- 5 156 337
- US-A1- 2011 302 905

## Description

### Domaine Technique

Le présent exposé concerne le domaine des lanceurs spatiaux, et concerne plus précisément les moteurs de tels lanceurs et la structure entourant la tuyère de ces moteurs.

### Technique antérieure

Les lanceurs spatiaux sont soumis à des contraintes importantes en termes de masse, que l'on cherche à minimiser afin de réduire le coût de chaque lancement. Au vu de ces problématiques, certains moteurs de lanceurs doivent pouvoir fonctionner en présence de couplages dynamiques significatifs entre plusieurs composants. On comprend aisément que de tels couplages dynamiques peuvent aboutir, par manque d'amortissement, à des déplacements ayant des amplitudes inacceptables et pouvant générer localement des contraintes trop élevées.

Il en ressort un besoin de limitation de l'amplitude des déplacements des modes dynamiques couplés des différents composants, tout en minimisant la masse des moyens employés pour réaliser cette fonction. En particulier, la plaque s'étendant radialement autour de la tuyère ou de la chambre de combustion pose une problématique importante en termes d'amplitudes de déplacement. Cette plaque a notamment pour fonction d'isoler le volume interne du lanceur comprenant le moteur du milieu extérieur. Du fait des mouvements possibles du moteur et de la tuyère, la plaque présente nécessairement un contour externe libre, ce qui peut donc entrainer des déplacements importants.

L'ajout de bielles formant des supports pour la plaque a été envisagé, mais n'est pas acceptable à la fois en termes de masse, et également en termes de contraintes générées du fait de la dilatation thermique des bielles, qui du fait notamment des différents matériaux employés pour la réalisation des différents composants du moteur, entrainent des efforts locaux extrêmement important.

Le document US3279193A divulgue un lanceur spatial selon le préambule de la revendication 1.

### Exposé de l'invention

Le présent exposé vise ainsi à répondre aux problématiques exposées précédemment.

A cet effet, le présent exposé concerne un lanceur spatial comprenant un corps de lanceur, un moteur comprenant une chambre de combustion débouchant sur une tuyère présentant un axe longitudinal, le moteur étant fixé au corps de lanceur au moyen d'un cardan, la tuyère étant munie d'une plaque s'étendant radialement autour de la tuyère ou de la chambre de combustion et isolant un volume interne de l'engin spatial d'un milieu externe, la plaque délimitant un segment interne du moteur et un segment externe du moteur, le segment interne du moteur comprenant tout ou partie de la chambre de combustion et étant disposé dans le corps de lanceur, isolé du milieu externe par la plaque, la plaque présentant une face interne et une face externe positionnées respectivement dans le volume interne et dans le milieu externe, caractérisé en ce qu'il comprend en outre une pluralité de câbles reliés chacun à la face interne de la plaque d'une part, et au segment interne du moteur d'autre part.

Selon un exemple, le moteur présente plusieurs points d'ancrage sur son segment interne, auxquels sont reliés les câbles.

Selon un exemple, ladite pluralité de câbles comprend plusieurs faisceaux de câbles comprenant chacun au moins deux câbles, chaque faisceau de câbles étant solidarisé à un point d'ancrage sur le segment interne du moteur.

Chaque faisceau de câbles comprend alors typiquement un amortisseur interposé entre le point d'ancrage et les câbles dudit faisceau de câbles.

Selon un exemple, les câbles sont en Kevlar.

Selon un exemple, les câbles présentent chacun une raideur dimensionnée de manière à réaliser un amortissement uniforme ou sensiblement uniforme des déformations de la plaque dans une direction allant du volume interne vers le milieu externe.

Selon un exemple, la plaque présente une forme d'anneau s'étendant entre un diamètre interne Di et un diamètre externe Dx, et dans lequel lesdits câbles sont reliés chacun à la face interne de la plaque dans une région délimitée par un anneau s'étendant entre 0,7 Dx et 0,9 Dx.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures listées ci-après.
[Fig. 1] La figure 1 est une vue schématique d'un moteur de lanceur selon un aspect de l'invention.
[Fig. 2] La figure 2 est une autre vue schématique d'un moteur de lanceur selon un aspect de l'invention.
[Fig. 3] La figure 3 est une vue schématique d'un moteur de lanceur selon un autre mode de réalisation de l'invention.
[Fig. 4] La figure 4 est une autre vue schématique d'un moteur de lanceur selon cet autre mode de réalisation de l'invention.

Sur l'ensemble des figures, les éléments en commun sont repérés par des références numériques identiques.

### Description des modes de réalisation

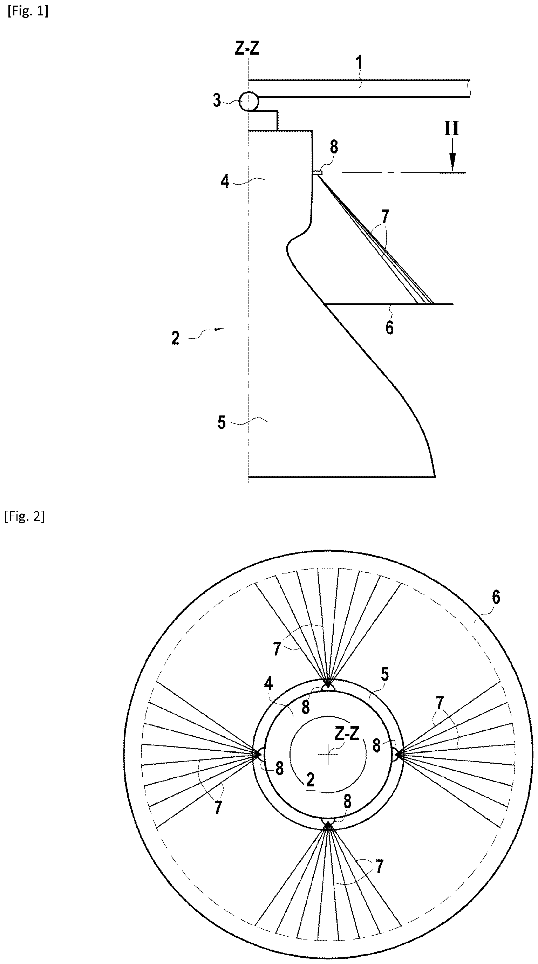

Les figures 1 et 2 sont deux vues illustrant schématiquement un moteur de lanceur selon un aspect de l'invention.

On représente sur ces figures un corps de lanceur 1 auquel est fixé un moteur 2 au moyen d'un cardan 3, permettant une modification de l'orientation du moteur 2 par rapport au corps de lanceur 1. Le moteur 2 est composé notamment d'une chambre de combustion 4 et d'une tuyère 5, aussi appelée divergent.

Le moteur 2 s'étend selon une direction longitudinale, définie par un axe longitudinal Z-Z, correspondant typiquement à un axe vertical étant entendu que cette orientation peut être modifiée. De manière générale, on peut définir l'axe longitudinal Z-Z du moteur 2 comme étant l'axe de révolution de la tuyère 5, cette dernière présentant une symétrie de révolution.

Une plaque 6 s'étend autour de la tuyère 5 ou autour de la chambre de combustion 4, typiquement selon une direction radiale par rapport à l'axe longitudinal Z-Z. La plaque 6 délimite un milieu interne et un milieu externe, le milieu interne étant isolé du milieu externe, ce dernier étant soumis à la pression évoluant de l'ambiante au vide lorsque le corps de lanceur 1 est au-delà de l'atmosphère. On définit ainsi pour le moteur 2 un segment interne disposé dans le milieu interne, et un segment externe disposé dans le milieu externe qui sont délimités par la plaque 6. Dans l'exemple illustré sur les figures, le segment interne comprend notamment la chambre de combustion 4 et une partie proximale de la tuyère 5, adjacente à la chambre de combustion 4, tandis que le segment externe comprend une partie distale de la tuyère 5, qui est la partie de la tuyère 5 la plus éloignée de la chambre de combustion 4, formant une extrémité libre de la tuyère 5.

La plaque 6 présente une forme générale d'anneau, s'étendant entre un diamètre interne Di correspondant typiquement au diamètre externe de la tuyère 5 ou de la chambre de combustion 4 à la section considérée selon la direction longitudinale, et un diamètre externe Dx correspondant à la dimension maximale de la plaque 6. La plaque 6 est typiquement munie d'un ensemble de nervures et de renforts structurels permettant d'assurer sa tenue mécanique notamment par rapport aux différences de pression pouvant intervenir entre le milieu interne et le milieu externe, et comprend typiquement des perçages pour permettre le passage de conduits d'échappement des gaz. On définit ainsi pour la plaque 6 une face interne et une face externe, qui se trouvent respectivement dans le milieu interne et dans le milieu externe.

La plaque 6 est reliée au corps de lanceur 1 typiquement au moyen d'une membrane souple, permettant d'assurer la séparation entre le milieu interne et le milieu externe, cette membrane souple pouvant se déformer, ce qui autorise les mouvements du moteur 2. La membrane souple est typiquement solidarisée à la périphérie externe de la plaque 6.

Afin d'amortir les déplacements de la plaque 6 résultant notamment des modes dynamiques du moteur 2, la structure proposée comprend une pluralité de câbles 7 ou tendeurs positionnés entre le moteur 2 et la plaque 6, dans le segment interne du moteur 2.

Les câbles 7 sont chacun reliés d'une part au segment interne du moteur 2, et d'autre part à la plaque 6 sur sa face interne, et sont typiquement montés tendus entre le segment interne du moteur 2 et la plaque 6.

Positionner ainsi des câbles 7 entre le segment interne du moteur 2 et la plaque 6 permet de réaliser une fonction d'amortissement du déplacement de la plaque 6 dans un sens uniquement, à savoir une déformation de la plaque 6 tendant à étirer les câbles 7, c'est-à-dire une déformation de la plaque 6 dans un sens allant vers le milieu externe. En effet, on comprend que l'utilisation de câbles 7 ne permet pas un maintien rigide de la plaque 6 comme l'auraient fait des bielles. Les câbles 7 réalisent donc ici un amortissement que l'on qualifie de non-linéaire.

Un tel amortissement est cependant suffisant pour permettre de modifier les fréquences des déplacements et d'apporter, par la non-linéarité introduite dans le système, un pseudo-amortissement à la structure, évitant donc l'apparition de déplacements ayant une amplitude important entrainant un risque de dégradation de la plaque 6 et des composants adjacents.

Le mode de fixation des câbles peut varier, en particulier sur le segment interne du moteur 2. Afin de réaliser la fonction d'amortissement, on comprend qu'il est préférable que le point de fixation des câbles soit le plus éloigné possible de la plaque 6. Par ailleurs, les câbles 7 sont préférentiellement orientés vers l'axe longitudinal Z-Z du moteur 2, afin de maximiser leur capacité de reprise des efforts.

Le fait de positionner les câbles 7 dans le milieu interne, et non pas dans le milieu externe, permet de protéger les câbles sur le plan thermique de l'ambiance externe du lanceur. La plaque 6 permet en effet de définir un milieu interne situé à l'arrière du lanceur et isolé du milieu externe ou milieu ambiant. Un tel positionnement permet d'employer des matériaux ne tolérant pas les températures élevées pour les câbles 7.

Le système proposé comprend typiquement une pluralité de câbles 7 disposés tout autour du moteur 2, afin de s'opposer aux déformations dans les différentes zones de la plaque 6.

On comprend ainsi qu'il est nécessaire de disposer de plusieurs points de fixation ou points d'ancrage pour les câbles sur le moteur 2. On note qu'une fixation des câbles 7 sur le corps de lanceur 1 n'est pas envisageable, dans la mesure où le moteur 2 est légèrement mobile par rapport au corps de lanceur 1. De même, une fixation des câbles 7 au niveau du cardan 3 n'est pas toujours possible, car les câbles seraient alors gênés par des composants du moteur 2, et risqueraient de les endommager.

Certains composants du moteur 2 présentent typiquement des points d'ancrage, pouvant notamment être des supports de manutention solidaires de la chambre de combustion 4 du moteur 2, ou des supports de vérins du moteur 2, qui sont des éléments adaptés pour supporter une charge importante. Ces points d'ancrage sont situés dans le segment interne du moteur 2.

On peut ainsi exploiter ces points d'ancrage pour y fixer les câbles 7 au moteur 2, sans nécessiter l'ajout d'éléments structurels spécifiques au moteur 2.

On regroupe ainsi typiquement les câbles 7 en plusieurs faisceaux de câbles, chaque faisceau de câbles étant solidarisé à un même point d'ancrage du moteur 2, et comprenant plusieurs câbles 7 qui sont fixés à la plaque 6 en différents points.

On représente ainsi schématiquement sur la figure 2 un exemple de moteur 2 présentant 4 faisceaux de câbles. Ce mode de réalisation correspond par exemple à un moteur comprenant deux points d'ancrage formés par des supports d'actionneurs, et deux points d'ancrages formés par des anneaux de manutention formés sur la chambre de combustion. On voit sur cette figure que les câbles de chaque faisceau s'étendent de manière à couvrir un secteur angulaire typiquement compris entre 90° et 150° ouplus précisément entre 90° et 120°, ce qui permet ainsi aux câbles 7 des différents faisceaux de réaliser une fonction d'amortissement sur une majorité de la plaque 6.

Les câbles 7 peuvent être associés à des amortisseurs qui sont interposés entre chaque câble 7 et son point de fixation sur le moteur 2.

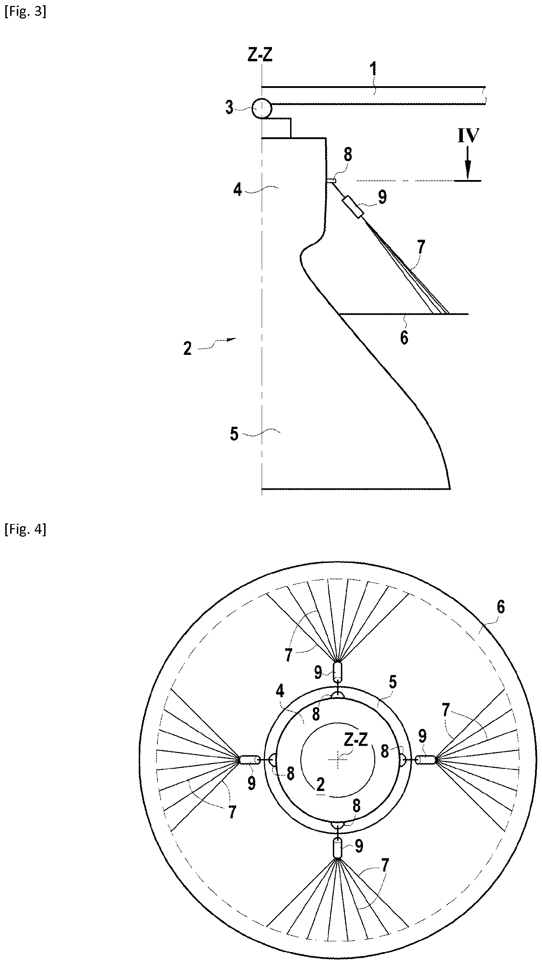

On représente schématiquement sur la figure 3 un exemple de mode de réalisation comprenant un tel amortisseur 9. Comme on le voit sur cette figure, l'amortisseur 9 est typiquement positionné au niveau de la fixation entre le câble 7 et le moteur 2, ici son point d'ancrage 8 sur la chambre de combustion 4. L'amortisseur 9 est typiquement un piston, un vérin, ou plus généralement un élément exerçant une force de rappel élastique. L'amortisseur 9 peut comprendre plusieurs moyens de rappel élastique configurés en parallèle. Un tel amortisseur 9 permet notamment d'amortir les chocs subis par les câbles 7, et ainsi les protéger contre un éventuel risque de rupture en cas de chocs trop violents.

Dans le cas où les câbles 7 sont regroupés par faisceaux comme décrit précédemment, alors chaque faisceau de câbles peut comprendre un unique amortisseur 9, qui est interposé entre les câbles 7 du faisceau de câble considéré et le point d'ancrage 8 associé. Un tel mode de réalisation est schématisé sur la figure 4, et est avantageux notamment en termes de masse par rapport à un mode de réalisation dans lequel chaque câble serait muni d'un amortisseur 9 dédié.

Les différents câbles 7 peuvent présenter des raideurs distinctes. En effet, compte tenu de la géométrie de la plaque 6 et du moteur 2 qui ne sont pas régulières, on comprend que les déformations auxquelles sera soumise la plaque 6 ne sont pas uniformes. Par ailleurs, la plaque 6 est typiquement munie de différents renforts structurels tels que des nervures, ce qui ne permet pas nécessairement de proposer des points de fixation régulièrement répartis pour les câbles 7 sur la face interne de la plaque 6. De plus, on comprend que le nombre limité de points d'ancrage sur le moteur 2 et leur emplacement entraine des configurations distinctes pour chaque câble, notamment en fonction de leur longueur et de leur inclinaison par rapport à la direction longitudinale Z-Z.

Il est ainsi possible d'employer des câbles 7 ayant des raideurs distinctes, par exemple en modifiant leur structure ou leur section, afin d'assurer un amortissement sensiblement uniforme dans les différentes zones de la plaque 6, prenant en compte non seulement la configuration de chaque câble 7, mais également la structure de la plaque 6. Les câbles 7 sont par exemple réalisés en Kevlar.

La plaque 6 présente une forme générale d'anneau, s'étendant entre un diamètre interne Di et un diamètre externe Dx. Le diamètre interne Di correspond typiquement au diamètre externe de la tuyère au niveau duquel la plaque 6 est positionnée.

Comme déjà indiqué précédemment, la périphérie externe de la plaque 6 est typiquement reliée au corps de lanceur 1 au moyen d'une membrane souple, assurant ainsi une étanchéité entre le milieu interne et le milieu externe. Les câbles 7 sont ainsi typiquement fixés sur la plaque 6 à un point intermédiaire entre le diamètre interne Di et le diamètre externe Dx.

A titre d'exemple, les câbles 7 sont chacun reliés à la face interne de la plaque 6 dans une région délimitée par un anneau s'étendant entre 0,7 Dx et 0,9 Dx, ou plus précisément entre 0,8 Dx et 0,9 Dx. Un tel montage permet d'amortir les mouvements de la plaque 6 à proximité de son extrémité, c'est-à-dire là où leur amplitude est la plus importante, tout en empêchant un contact entre les câbles 7 et la membrane souple reliant la plaque 6 au corps de lanceur 1.

Les différents câbles 7 peuvent être fixés à des régions de la plaque 6 ayant des diamètres distincts par rapport à l'axe longitudinal Z-Z ; le point de fixation de chaque câble 7 peut ainsi être déterminé individuellement en fonction de la géométrie de la plaque 6 et des mouvements observés.

De manière optionnelle, un écran, par exemple en plastique, peut être positionné entre la région de fixation des câbles 7 sur la plaque 6 et la périphérie externe de la plaque 6. Un tel écran s'étend de manière à former une nervure ayant une forme généralement circulaire autour de l'axe longitudinal Z-Z, et forme ainsi une protection supplémentaire prévenant tout contact entre les câbles 7 et la membrane souple reliant la plaque 6 au corps de lanceur 1.

Le système proposé permet ainsi de réaliser une fonction d'amortissement des déplacements de la plaque résultant notamment des vibrations du moteur 2, sans nécessiter l'ajout de composants ayant une masse importante, et en s'affranchissant des contraintes liées au comportement thermique des différents composants.

Le système proposé est appliqué à la plaque 6 d'un moteur 2. On note que, selon des exemples qui ne relèvent pas de l'invention, un tel amortissement peut également être employé pour d'autres composants d'un lanceur spatial, notamment pour des conduites de fluide, par exemple les lignes d'alimentation en ergols d'un moteur de lanceur spatial. De tels composants ont en effet tendance à vibrer sous l'effet des sollicitations dynamiques générées par le lanceur et par le moteur, et présenter des mouvements ayant des amplitudes trop importantes.

Afin de remédier à cette situation, on peut ainsi réaliser un montage similaire à celui proposé pour la plaque 6, à savoir associer les conduites à des câbles qui sont également fixés au corps de lanceur 1 (si les conduites concernées sont solidaires du corps du lanceur 1) ou au moteur 2 (si les conduites concernées sont solidaires du moteur 2). Comme pour la plaque 6, les câbles réalisent alors une fonction d'amortissement des mouvements des conduites uniquement selon une direction, et réalisent donc une fonction d'amortissement non linéaire. Un tel amortissement est toutefois suffisant pour atténuer l'amplitude des vibrations, et permet de minimiser la masse de ce système d'amortissement.

## Revendications

1. Lanceur spatial comprenant un corps de lanceur (1), un moteur (2) comprenant une chambre de combustion (4) débouchant sur une tuyère (5) présentant un axe longitudinal (Z-Z), le moteur (2) étant fixé au corps de lanceur (1) au moyen d'un cardan (3), la tuyère (5) étant munie d'une plaque (6) s'étendant radialement autour de la tuyère (5) ou de la chambre de combustion (4) et isolant un volume interne de l'engin spatial d'un milieu externe,
la plaque (6) délimitant un segment interne du moteur (2) et un segment externe du moteur (2), le segment interne du moteur (2) comprenant tout ou partie de la chambre de combustion (4) et étant disposé dans le corps de lanceur (1), isolé du milieu externe par la plaque (6),
la plaque (6) présentant une face interne et une face externe positionnées respectivement dans le volume interne et dans le milieu externe,
**caractérisé en ce qu'**il comprend en outre une pluralité de câbles (7) reliés chacun à la face interne de la plaque (6) d'une part, et au segment interne du moteur (2) d'autre part.

2. Lanceur selon la revendication 1, dans lequel le moteur (2) présente plusieurs points d'ancrage (8) sur son segment interne, auxquels sont reliés les câbles (7).

3. Lanceur selon l'une des revendications 1 ou 2, dans lequel ladite pluralité de câbles (7) comprend plusieurs faisceaux de câbles comprenant chacun au moins deux câbles (7), chaque faisceau de câbles étant solidarisé à un point d'ancrage (8) sur le segment interne du moteur (2).

4. Lanceur selon la revendication 3, dans lequel chaque faisceau de câbles comprend un amortisseur (9) interposé entre le point d'ancrage (8) et les câbles (7) dudit faisceau de câbles.

5. Lanceur selon l'une des revendications 1 à 4, dans lequel les câbles (7) sont en Kevlar.

6. Lanceur selon l'une des revendications 1 à 5, dans lequel les câbles (7) présentent chacun une raideur dimensionnée de manière à réaliser un amortissement uniforme ou sensiblement uniforme des déformations de la plaque (6) dans une direction allant du volume interne vers le milieu externe.

7. Lanceur selon l'une des revendications 1 à 6, dans lequel la plaque (6) présente une forme d'anneau s'étendant entre un diamètre interne Di et un diamètre externe Dx, et dans lequel lesdits câbles (7) sont reliés chacun à la face interne de la plaque (7) dans une région délimitée par un anneau s'étendant entre 0,7 Dx et 0,9 Dx.

## Patentansprüche

1. Weltraumrakete, umfassend einen Raketenkörper (1), einen Motor (2), der eine Brennkammer (4) umfasst, die sich zu einer Düse (5) mit einer Längsachse (Z-Z) hin öffnet, wobei der Motor (2) an dem Raketenkörper (1) mittels eines Kardangelenks (3) befestigt ist, wobei die Düse (5) mit einer Platte (6) versehen ist, die sich radial um die Düse (5) oder die Brennkammer (4) herum erstreckt und ein Innenvolumen des Raumfahrzeugs von einer Außenumgebung isoliert,
wobei die Platte (6) ein Innensegment des Motors (2) und ein Außensegment des Motors (2) begrenzt, wobei das Innensegment des Motors (2) die gesamte Brennkammer (4) oder einen Teil davon umfasst und in dem Raketenkörper (1) isoliert von der Außenumgebung durch die Platte (6) angeordnet ist,
wobei die Platte (6) eine Innenfläche und eine Außenfläche aufweist, die jeweils in dem Innenvolumen und in der Außenumgebung positioniert sind,
**dadurch gekennzeichnet, dass** sie ferner mehrere Kabel (7) umfasst, die jeweils einerseits mit der Innenfläche der Platte (6) und andererseits mit dem Innensegment des Motors (2) verbunden sind.

2. Rakete nach Anspruch 1, wobei der Motor (2) mehrere Verankerungspunkte (8) an seinem Innensegment aufweist, mit denen die Kabel (7) verbunden sind.

3. Rakete nach einem der Ansprüche 1 oder 2, wobei die mehreren Kabel (7) mehrere Kabelbündel umfassen, die jeweils mindestens zwei Kabel (7) umfassen, wobei jedes Kabelbündel fest mit einem Verankerungspunkt (8) auf dem Innensegment des Motors (2) verbunden ist.

4. Rakete nach Anspruch 3, wobei jedes Kabelbündel einen Dämpfer (9) umfasst, der zwischen dem Verankerungspunkt (8) und den Kabeln (7) des Kabelbündels eingefügt ist.

5. Rakete nach einem der Ansprüche 1 bis 4, wobei die Kabel (7) aus Kevlar bestehen.

6. Rakete nach einem der Ansprüche 1 bis 5, wobei die Kabel (7) jeweils eine Steifigkeit aufweisen, die so bemessen ist, dass eine gleichmäßige oder im Wesentlichen gleichmäßige Dämpfung der Verformungen der Platte (6) in einer Richtung erreicht wird, die von dem Innenvolumen zu der Außenumgebung geht.

7. Rakete nach einem der Ansprüche 1 bis 6, wobei die Platte (6) eine Ringform aufweist, die sich zwischen einem Innendurchmesser Di und einem Außendurchmesser Dx erstreckt, und wobei die Kabel (7) jeweils mit der Innenfläche der Platte (7) in einem Bereich verbunden sind, der durch einen Ring begrenzt ist, der sich zwischen 0,7 Dx und 0,9 Dx erstreckt.

## Claims

1. A space launcher comprising a launcher body (1), an engine (2) comprising a combustion chamber (4) opening out onto a nozzle (5) having a longitudinal axis (Z-Z), the engine (2) being fixed to the launcher body (1) by means of a grimbal (3), the nozzle (5) being provided with a plate (6) extending radially around the nozzle (5) or the combustion chamber (4) and isolating a internal volume of the spacecraft from an external medium,
the plate (6) delimiting an inner segment of the engine (2) and an outer segment of the engine (2), the inner segment of the engine (2) comprising all or part of the combustion chamber (4) and being disposed in the launcher body (1), isolated from the external medium by the plate (6),
the plate (6) having an inner face and an outer face positioned respectively in the internal volume and in the external medium,
**characterized in that** it further comprises a plurality of cables (7) each connected to the inner face of the plate (6) on the one hand, and to the inner segment of the engine (2) on the other hand.

2. The launcher according to claim 1, wherein the engine (2) has several anchor points (8) on its inner segment, to which the cables (7) are connected.

3. The launcher according to any of claims 1 or 2, wherein said plurality of cables (7) comprises several cable harnesses each comprising at least two cables (7), each cable harness being secured to an anchor point (8) on the inner segment of the engine (2).

4. The launcher according to claim 3, wherein each cable harness comprises a damper (9) interposed between the anchor point (8) and the cables (7) of said cable harness.

5. The launcher according to any of claims 1 to 4, wherein the cables (7) are made of Kevlar.

6. The launcher according to any of claims 1 to 5, wherein the cables (7) each have a stiffness dimensioned so as to achieve a uniform or substantially uniform damping of the deformations of the plate (6) in a direction from the internal volume to the external medium.

7. The launcher according to any of claims 1 to 6, wherein the plate (6) has a ring shape extending between an internal diameter Di and an external diameter Dx, and wherein said cables (7) are each connected to the inner face of the plate (7) in a region delimited by a ring extending between 0.7 Dx and 0.9 Dx.
